# EUROPÄISCHE PATENTANMELDUNG

(11) **EP 1 277 820 A2**
(43) Veröffentlichungstag der Anmeldung: **22.01.2003**
(21) Anmeldenummer: 02011424.5
(22) Anmeldetag: 24.05.2002
(51) Int. Cl.: C09J 11/08, C09J 11/06, C09J 9/00

(54) **Antimikrobielle Kleister**

(30) Priorität: 19.07.2001 DE 10135162
(71) Anmelder: Creavis Gesellschaft für Technologie und Innovation mbH, 45764 Marl (DE)
(72) Erfinder: Ottersbach, Peter, Dr., 51570 Windeck (DE); Inhester, Martina, 45699 Herten (DE); Kossmann, Beate, Dr., 58091 Hagen (DE)

(57) **Zusammenfassung**

Die Erfindung betrifft antimikrobielle Kleister, deren Herstellung und Verwendung.

## Beschreibung

Die Erfindung betrifft antimikrobielle Kleister, deren Herstellung und Verwendung.

Besiedlungen und Ausbreitungen von Bakterien auf Oberflächen von Rohrleitungen, Behältern oder Verpackungen sind im hohen Maße unerwünscht. Es bilden sich häufig Schleimschichten, die Mikrobenpopulationen extrem ansteigen lassen, die Wasser-, Getränke- und Lebensmittelqualitäten nachhaltig beeinträchtigen und sogar zum Verderben der Ware sowie zur gesundheitlichen Schädigung der Verbraucher führen können.

Aus allen Lebensbereichen, in denen Hygiene von Bedeutung ist, sind Bakterien fernzuhalten. Davon betroffen sind Textilien für den direkten Körperkontakt, insbesondere für den Intimbereich und für die Kranken- und Altenpflege. Außerdem sind Bakterien fernzuhalten von Möbelund Geräteoberflächen in Pflegestationen, insbesondere im Bereich der Intensivpflege und der Kleinstkinder-Pflege, in Krankenhäusern, insbesondere in Räumen für medizinische Eingriffe und in Isolierstationen für kritische Infektionsfälle sowie in Toiletten.

Daneben gibt es auch eine Reihe technischer Systeme, die durch mikrobiellen Bewuchs in ihrer Leistungsfähigkeit stark eingeschränkt oder aber sogar gänzlich unbrauchbar werden. Insbesondere Systeme zur Stofftrennung, wie z.B. Membranen oder Filter, werden durch mikrobielle Ablagerungen und Bewuchs stark beeinträchtigt. So verkürzt z.B. bei der Meerwasserentsalzung der Bewuchs der Systeme mit Meeresalgen die Laufzeiten oft beträchtlich. Bei anderen Systemen, wie z. B. der Tiefenfiltration, kann der Filterkuchen durch aufgewachsene Biofilme vorzeitig verstopfen. Dem versucht man bei der Querstromfiltration durch Einsatz einer definierten Strömung quer zur Filtrationsebene zu begegnen, was sich in der Praxis aber bisher als nicht ausreichend zur Verhinderung des Aufwachsens von Biofilmen gezeigt hat.

Gegenwärtig werden Geräte, Oberflächen von Möbeln und Textilien gegen Bakterien im Bedarfsfall oder auch vorsorglich mit Chemikalien oder deren Lösungen sowie Mischungen behandelt, die als Desinfektionsmittel mehr oder weniger breit und massiv antimikrobiell wirken. Solche chemischen Mittel wirken unspezifisch, sind häufig selbst toxisch oder reizend oder bilden gesundheitlich bedenkliche Abbauprodukte. Häufig zeigen sich auch Unverträglichkeiten bei entsprechend sensibilisierten Personen.

Eine aus gesundheitsprophylaktischer Sicht sehr wichtige Aufgabe stellt die Vermeidung von Mikroben-, insbesondere Schimmelpilzbefall, von Raumoberflächen, insbesondere Innenflächen von bewohnten Räumen dar. Als besonders kritisch erweisen sich in diesem Zusammenhang tapezierte Oberflächen, da diese das "Atmen" der Bausubstanz behindern, was einerseits zur verstärkten Kondensation von Luftfeuchtigkeit und andererseits zu einer verminderten Feuchtigkeitsabgabe und damit verbundenen Trocknung von feuchten Wänden beiträgt. Dies ist umso bedeutsamer, da gerade die deutsche Bevölkerung als die "tapezierfreudigste" der Welt gilt. So verklebt statisch betrachtet jeder Bundesbürger fast zwei Rollen pro Jahr, was insgesamt einer Gesamtmenge von ca. 140 Millionen Tapetenrollen entspricht. Allein zur Herstellung geschäumter Vinyltapeten werden, mit steigender Tendenz, hierzulande jährlich 25.000 Tonnen PVC-Paste eingesetzt.

Diese beliebten Vinyltapeten werfen in Bezug auf den Feuchtigkeitsaustausch allerdings auch besondere Probleme auf. So erreicht die Wasserdampfdiffusionsfähigkeit, welche durch die DIN 52615 in Form einer equivalenten Luftschichtdicke klassifiziert wird, bei Papiertapeten Werte zwischen 5 bis 10 Zentimeter, bei PVC-Tapeten demgegenüber Werte von 200 bis 300 Zentimeter. Vinyltapeten zeigen demnach gegenüber Papiertapeten eine deutlich verminderte Atmungsfähigkeit.

Als Folge dieser verminderten Atmungsfähigkeit kondensiert Feuchtigkeit zwischen Wand und Tapete, bzw. an der Grenzfläche Wand und Kleister bzw. Tapete und Kleister. Dieses resultiert in einer verstärkten Schimmelpilzbildung, welche durch die organischen Bestandteile des Kleisters, die von Mikroorganismen zumindest partiell metabolisiert werden können, zusätzlich stimuliert wird. Desweiteren sind Vinyltapeten oft mit niedermolekularen Weichmachern versetzt, die ihrerseits von Mikroorganismen verstoffwechselt werden können und somit einen mikrobiellen Bewuchs weiter stimulieren. Da der Bewuchs oft unterhalb der sichtbaren Oberfläche stattfindet, lassen sich kontaminierte Stellen optisch auch sehr schlecht bestimmen. Daher stellt man derartige Belastungen oft erst durch ihre gesundheitsschädlichen Auswirkungen in Form von Haut- und Atemwegserkrankungen bzw. allergischen Reaktionen auf betroffene Personen fest, die durch Schimmelpilzsporen in der Umgebungsluft induziert werden. Am häufigsten werden bei sporadisch stattfindenden Raumluftmessungen hierzulande die Schimmelpilzgattungen Aspergillus und Cladosporium nachgewiesen.

Um einen mikrobiellen Befall zu vermeiden bzw. zu unterdrücken, der auf die Anwesenheit von Feuchtigkeit und Nährstoffen aus Oberflächenmaterialien, wie z.B. den beschriebenen Kleisterbestandteilen und Weichmachern, angewiesen ist, bietet sich gerade bei wasserdampfdurchlässigkeitsbehindernden Tapeten, wie z.B. Vinyltapeten, ein Einsatz von antimikrobiell ausgerüsteten Kleistern an. Konventionelle Biozide oder Desinfektionsmittel, wie z.B. Natriumhypochlorit, Formaldehyd oder auch Isothiazolinderivate, sind aufgrund ihrer akuten Toxizität und ihrem bekannten allergenen Potential für derartige Anwendungen ungeeignet.

Daneben werden diese Verbindungen relativ rasch verbraucht, so dass entweder die Schutzwirkung nach einer relativ kurzen Phase verpufft oder aber ein erneuter Einsatz dieser toxischen Substanzen vonnöten ist.

Als Alternative hierzu werden Substanzen gesucht, die über einen langen Zeitraum hinweg eine effiziente mikrobizide Wirkung zeigen, sich möglichst wenig bis gar nicht toxisch gegenüber höheren Organismen verhalten, nicht in die Raumluft abgegeben werden und die anwendungstechnischen Eigenschaften des zu imprägnierenden Materials nahezu unbeeinflußt lassen.

Es wurde überraschenderweise gefunden, dass sich der mikrobizide Befall von Tapeten durch Verwendung von mikrobizid ausgerüsteten Kleistern verhindern bzw. längere Zeit unterdrücken läßt.

Gegenstand der vorliegenden Erfindung sind daher antimikrobielle Kleister, wobei der Trockenkleister 0,01 - 70 Gew.-% mindestens einer antimikrobiellen Verbindung enthält.

Kleister im Sinne der vorliegenden Erfindung sind Verbindungen oder Gemische gemäß der Definition in Römpp Lexikon Chemie, Georg Thieme Verlag 1999. Kleister sind demnach Klebstoffe in Form eines wässrigen Quellungsproduktes, das im Gegensatz zu Leimen schon bei niedriger Feststoffkonzentration eine hochviskose, nicht fadenziehende Masse bildet.

Basis-Rohstoffe für Kleister sind vorwiegend Produkte natürlichen Ursprungs wie Mehl, Stärke sowie wasserlösliche Derivate (Ether) von Cellulose und Stärke. Diese werden in der ca. 4-7 fachen (Mehl, Stärke) bzw. 20-50 fachen (Cellulose-, Stärke-Derivate) Menge Wasser suspendiert. Während die Verkleisterung der Celluloseether (Carboxymethyl-, Methylcellulosen) und Stärkeether (z. B. Carboxymethylstärke) in kaltem Wasser erfolgt, muß die des Mehls und die der nativen Stärke bei höheren Temperaturen (ca. 80 - 100 °C) durchgeführt werden.

Der hier aufgeführte Mangel von Kleistern auf Basis natürlicher Produkte, nämlich die Anfälligkeit gegen mikrobielle Zerstörung kann durch die erfindungsgemäßen Kleistersysteme ohne Zusatz von Konservierungsmittel behoben werden.

Basis für die erfindungsgemäßen Kleistersysteme können daher insbesondere natürliche, d. h. nachwachsende Rohstoffe sein.

Die erfindungsgemäßen Kleistersysteme können z. B. Papierkleister, Holzkleister oder Tapetenkleister sein.

"Trockenkleister" bezeichnet das nicht-gequollene, trockene Material. Antimikrobielle Verbindungen, die in den erfindungsgemäßen Kleistern eingesetzt werden können, sind antimikrobielle Polymere oder Aminoalkohole. Die antimikrobiellen Verbindungen können 0,01 - 70, bevorzugt 0,1 - 40, besonders bevorzugt 0,1 - 30 bzw. 0,1 bis 20 oder 0,1 bis 15 Gew.-% im erfindungsgemäßen Kleister enthalten sein.

Als Aminoalkohole kommen dabei prinzipiell alle aminofunktionalisierten Derivate von Alkoholen in Frage, insbesondere aber welche der folgenden Formel I 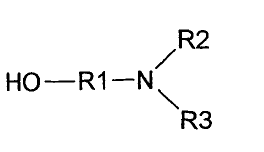 mit
- R1 =: verzweigter oder unverzweigter aliphatischer oder aromatischer Kohlenwasserstoffrest mit 1 bis 15 Kohlenstoffatomen.
- R2 =: H, verzweigter oder unverzweigter aliphatischer oder aromatischer Kohlenwasserstoffrest mit 1 bis 15 Kohlenstoffatomen.
- R3 =: H, verzweigter oder unverzweigter aliphatischer oder aromatischer Kohlenwasserstoffrest mit 1 bis 15 Kohlenstoffatomen.

Bevorzugt werden als Alkohole der Formel (I) tert.-Butylaminoethanol, tert.-Butylaminomethanol, tert.-Butylaminopropanol, 2-Butylaminoethanol, 2-Butylaminomethanol, 2-Butylaminopropanol, 2-Diethylaminoethanol, 2-Diethylaminomethanol, 2-Diethylaminopropanol, 2-Dimethylaminoethanol, 2-Dimethylaminomethanol, 2-Dimethylaminopropanol, Aminomethanol, Aminoethanol, Aminopropanol und/oder Aminobutanol eingesetzt.

Der Anteil der Aminoalkohole in den Kleistern kann 0,1 bis 40 Gew.-%, bevorzugt 0.1 bis 30, besonders bevorzugt 0,1 bis 15 Gew.-% betragen.

Als antimikrobielle Polymere können die aus der europäischen Patentanmeldungen 0 862 858 bzw. den Patentanmeldungen DE 100 24 270, DE 100 22 406, PCT/EP00/06501, DE 100 14 726, DE 100 08 177, PCT/EP00/06812, PCT/EP00/06487, PCT/EP00/06506, PCT/EP00/02813, PCT/EP00/02819, PCT/EP00/02818, PCT/EP00/02780, PCT/EP00/02781, PCT/EP00/02783, PCT/EP00/02782, PCT/EP00/02799, PCT/EP00/02798, PCT/EP00/00545, PCT/EP00/00544, bekannten Polymere eingesetzt werden..

Diese Polymere enthalten keine niedermolekularen Bestandteile; die antimikrobiellen Eigenschaften sind auf den Kontakt von Bakterien mit der Oberfläche zurückzuführen.

Bevorzugt werden zur Herstellung der antimikrobiellen Polymere Stickstoff- und Phosphorfunktionalisierte Monomere eingesetzt. Insbesondere werden diese Polymere aus mindestens einem der folgenden Monomere hergestellt:
Methacrylsäure-2-tert.-butylaminoethylester, Methacrylsäure-2-diethylaminoethylester, Methacrylsäure-2-diethylaminomethylester, Acrylsäure-2-tert.-butylaminoethylester, Acrylsäure-3-dimethylaminopropylester, Acrylsäure-2-diethylaminoethylester, Acrylsäure-2-dimethylaminoethylester, Dimethylaminopropylmethacrylamid, Diethylaminopropylmethacrylamid, Acrylsäure-3-dimethylaminopropylamid, 2-Methacryloyloxyethyltrimethylammoniummethosulfat, Methacrylsäure-2-diethylaminoethylester, 2-Methacryloyloxyethyltrimethylammoniumchlorid, 3-Methacryloylaminopropyltrimethylammonium-chlorid, 2-Methacryloyloxyethyltrimethylammoniumchlorid, 2-Acryloyloxyethyl-4-benzoyldimethylammoniumbromid, 2- Methacryloyloxyethyl-4-benzoyldimethylammoniumbromid, 2-Acrylamido-2-methyl-1-propansulfonsäure, 2-Diethylaminoethylvinylether und/oder 3-Aminopropylvinylether.

Optional können bei der Herstellung der antimikrobiellen Polymere weitere aliphatisch ungesättigte Monomere Verwendung finden. Hierbei handelt es sich insbesondere um Acrylate oder Methacrylate, z. B. Acrylsäure, tert.-Butylmethacrylat oder Methylmethacrylat, Styrol oder seine Derivate, Vinylchlorid, Vinylether, Acrylamide, Acrylnitrile, Olefine (Ethylen, Propylen, Butylen, Isobutylen), Allylverbindungen, Vinylketone, Vinylessigsäure, Vinylacetat oder Vinylester, insbesondere z.B. Methacrylsäuremethylester, Methacrylsäureethylester, Methacrylsäurebutylester, Methacrylsäure-tert.-butylester, Acrylsäuremethylester, Acrylsäureethylester, Acrylsäurebutylester und/oder Acrylsäure-tert.-butylester.

Der Anteil der antimikrobiellen Polymere in den Kleistern kann 0.01 bis 70 Gew.-%, bevorzugt 0.1 bis 40, besonders bevorzugt 0,1 bis 20 Gew.-% betragen. Als Alternative zur direkten Beimengung der antimikrobiellen Polymere in ein übliches getrocknetes Fertigkleisterkonzentrat bietet sich darüber hinaus noch die Zugabe einer auf Basis eines antimikrobiellen Polymers hergestellten antimikrobiellen wäßrigen Emulsion unmittelbar in den bereits fertig angerührten Kleister an.

Das Verfahren zur Herstellung des Kleisters gestaltet sich derart, dass man im Verlauf des Herstellungsverfahrens der Kleister oder im Anschluß daran mindestens eine antimikrobielle Verbindung, d. h. einen Aminoalkohol oder ein antimikrobielles Polymer zugibt. Im Anschluß daran findet während des Quell- bzw. Löseprozesses vermutlich eine, zumindest partielle, Umsetzung des antimikrobiellen Polymers bzw. des Aminoalkohols mit den anderen Bestandteilen der Formulierung statt, insbesondere der Methylcellulose statt.

Es wird vermutet, dass im Falle des Aminoalkohols dieser im Verlauf der Reaktion entweder in das entstehende polymere Netzwerk eingebaut oder aber bei Anwesenheit geeigneter Reaktionspartner über seine Hydroxy- oder Aminofunktion an das polymere Geflecht des enstehenden getrockneten Kleisterfilmes fixiert wird. Als Kopplungsreaktionen kommen dabei prinzipiell alle Reaktionstypen der organischen Chemie in Betracht, welche mit Hydroxy- oder Aminogruppen unter Ausbildung chemischer Verbindungen reagieren, z. B. Veresterung oder Veretherung. Daneben spielen vermutlich auch rein physisch bedingte Kopplungsmechanismen, wie z.B die Physisorption, eine entscheidende Rolle.

Die erfindungsgemäßen Kleister lassen sich prinzipiell mit allen Produkten weiterverarbeiteben, die auch bisher auf unmodifizierten Kleistern basieren. Dies gilt insbesondere für Anwendungen der Kleister als Tapetenkleister in Kombination mit Papier-, Vinyl-, Raufaser-, Textil- und Naturfasertapeten.

Durch die beschriebenen Vorgehensweisen erhält man antimikrobiell ausgerüstete Kleister, die sowohl die erforderlichen mechanischen und Verarbeitungseigenschaften für die gestellten Aufgaben als auch die biochemische Hemmwirkung für das Mikrobenwachstum in nahezu idealer Weise miteinander verbinden. Da sowohl der Aminoalkohol als auch die Polymere im Allgemeinen schwer flüchtig und durch das Herstellverfahren bedingt zumindest partiell in der Matrix des Kleisters fixiert sind, werden demzufolge keine bedenklichen niedermolekularen Bestandteile in die Umwelt und damit Raumluft freigesetzt. Solche Systeme können somit auch in sensiblen Bereichen, wie z.B. der Auskleidung von Allergiker- und Schlafräumen, Verwendung finden, ohne dass mit einem toxikologisch bedenklichen Übertritt von Bioziden aus dem Produkt zu rechnen ist.

### Verwendung der modifizierten Substrate

Weitere Gegenstände der vorliegenden Erfindung sind die Verwendung der erfindungsgemäßen Kleister als Tapetenkleister, Papierkleister oder Holzkleister.

Zur weiteren Beschreibung der vorliegenden Erfindung werden die folgenden Beispiele gegeben, welche die Erfindung weiter erläutern, nicht aber ihren Umfang begrenzen sollen, wie er in den Patentansprüchen dargelegt ist.

### Beispiel 1:

0,6 g 2-tert.-Butylaminoethanol werden mit 3,4 g des Kleisters TTW Normal (Fa. Wilke/Magdeburg) vermischt. Dieser Mischung werden 208 mL Wasser zugegeben, und die Mischung wird daraufhin 1 Stunde lang gerührt. 5 g der so erhaltenen Kleistermischung werden auf eine 20 mal 40 cm große Alumiumplatte aufgestrichen und anschließend bei 30 °C für die Dauer von 72 Stunden getrocknet.

### Beispiel 1a:

Ein 2 mal 3 cm großes Stück der beschichteten Aluminumplatte aus Beispiel 1 wird auf den Boden eines Becherglases gelegt, das 10 mL einer Testkeimsuspension von Pseudomonas aeruginosa enthält. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10² Keime pro mL gesunken.

### Beispiel 1b:

Ein 2 mal 3 cm großes Stück der beschichteten Aluminumplatte aus Beispiel 1 wird auf den Boden eines Becherglases gelegt, das 10 mL einer Testkeimsuspension von Staphylococcus aureus enthält. Das so vorbereitete System wird nun für die Dauer von 4 Stunden geschüttelt. Danach wird 1 mL der Testkeimsuspension entnommen. Nach Ablauf dieser Zeit sind keine Keime von Staphylococcus aureus mehr nachweisbar.

### Beispiel 1c:

Je ein 2 mal 3 cm großes Stück der beschichteten Aluminumplatte aus Beispiel 1 wird mit Chlorella sp., Trentepohlia sp., Gloeocapsa sp. Calothrix sp. und Aspergilus niger beimpft. Diese Proben werden im Anschluß für 3 Wochen in einen Brutschrank verbracht. Im Gegensatz zu mitlaufenden Kontrollproben aus unmodifiziertem Kleister ist bei keinem der modifizierten Kleisterproben ein Bewuchs feststellbar.

### Beispiel 2:

0,3 g 2-tert.-Butylaminoethanol werden mit 3,7 g des Kleisters TTW Normal (Fa. Wilke/Magdeburg) vermischt. Dieser Mischung werden 208 mL Wasser zugegeben, und die Mischung wird daraufhin 1 Stunde lang gerührt. 5 g der so erhaltenen Kleistermischung werden auf eine 20 mal 40 cm große Alumiumplatte aufgestrichen und anschließend bei 30 °C für die Dauer von 72 Stunden getrocknet.

### Beispiel 2a:

Ein 2 mal 3 cm großes Stück der beschichteten Aluminumplatte aus Beispiel 2 wird auf den Boden eines Becherglases gelegt, das 10 mL einer Testkeimsuspension von Pseudomonas aeruginosa enthält. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10⁴ Keime pro mL gesunken.

### Beispiel 2b:

Ein 2 mal 3 cm großes Stück der beschichteten Aluminumplatte aus Beispiel 2 wird auf den Boden eines Becherglases gelegt, das 10 mL einer Testkeimsuspension von Staphylococcus aureus enthält. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10³ Keime pro mL gesunken.

### Beispiel 2c:

Je ein 2 mal 3 cm großes Stück der beschichteten Aluminumplatte aus Beispiel 2 wird mit Chlorella sp., Trentepohlia sp., Gloeocapsa sp. Calothrix sp. und Aspergilus niger beimpft.

Diese Proben werden im Anschluß für 3 Wochen in einen Brutschrank verbracht. Im Gegensatz zu mitlaufenden Kontrollproben aus unmodifiziertem Kleister ist bei keinem der modifizierten Kleisterproben ein Bewuchs feststellbar.

### Beispiel 3:

0,6 g 3-Aminopropanol werden mit 3,4 g des Kleisters TTW Normal (Fa. Wilke/ Magdeburg) vermischt. Dieser Mischung werden 208 mL Wasser zugegeben, und die Mischung wird daraufhin 1 Stunde lang gerührt. 5 g der so erhaltenen Kleistermischung werden auf eine 20 mal 40 cm große Alumiumplatte aufgestrichen und anschließend bei 30 °C für die Dauer von 72 Stunden getrocknet.

### Beispiel 3a:

Ein 2 mal 3 cm großes Stück der beschichteten Aluminumplatte aus Beispiel 3 wird auf den Boden eines Becherglases gelegt, das 10 mL einer Testkeimsuspension von Pseudomonas aeruginosa enthält. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10² Keime pro mL gesunken.

### Beispiel 3b:

Ein 2 mal 3 cm großes Stück der beschichteten Aluminumplatte aus Beispiel 3 wird auf den Boden eines Becherglases gelegt, das 10 mL einer Testkeimsuspension von Staphylococcus aureus enthält. Das so vorbereitete System wird nun für die Dauer von 4 Stunden geschüttelt. Danach wird 1 mL der Testkeimsuspension entnommen. Nach Ablauf dieser Zeit sind keine Keime von Staphylococcus aureus mehr nachweisbar.

### Beispiel 3c:

Je ein 2 mal 3 cm großes Stück der beschichteten Aluminumplatte aus Beispiel 3 wird mit Chlorella sp., Trentepohlia sp., Gloeocapsa sp. Calothrix sp. und Aspergilus niger beimpft. Diese Proben werden im Anschluß für 3 Wochen in einen Brutschrank verbracht. Im Gegensatz zu mitlaufenden Kontrollproben aus unmodifiziertem Kleister ist bei keinem der modifizierten Kleisterproben ein Bewuchs feststellbar.

### Beispiel 4:

0,6 g 2-Butylaminoethanol werden mit 3,4 g des Kleisters TTW Normal (Fa. Wilke/Magdeburg) vermischt. Dieser Mischung werden 208 mL Wasser zugegeben, und die Mischung wird daraufhin 1 Stunde lang gerührt. 5 g der so erhaltenen Kleistermischung werden auf eine 20 mal 40 cm große Alumiumplatte aufgestrichen und anschließend bei 30 °C für die Dauer von 72 Stunden getrocknet.

### Beispiel 4a:

Ein 2 mal 3 cm großes Stück der beschichteten Aluminumplatte aus Beispiel 4 wird auf den Boden eines Becherglases gelegt, das 10 mL einer Testkeimsuspension von Pseudomonas aeruginosa enthält. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10⁴ Keime pro mL gesunken.

### Beispiel 4b:

Ein 2 mal 3 cm großes Stück der beschichteten Aluminumplatte aus Beispiel 4 wird auf den Boden eines Becherglases gelegt, das 10 mL einer Testkeimsuspension von Staphylococcus aureus enthält. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10³ Keime pro mL gesunken.

### Beispiel 4c:

Je ein 2 mal 3 cm großes Stück der beschichteten Aluminumplatte aus Beispiel 4 wird mit Chlorella sp., Trentepohlia sp., Gloeocapsa sp. Calothrix sp. und Aspergilus niger beimpft. Diese Proben werden im Anschluß für 3 Wochen in einen Brutschrank verbracht. Im Gegensatz zu mitlaufenden Kontrollproben aus unmodifiziertem Kleister ist bei keinem der modifizierten Kleisterproben ein Bewuchs feststellbar.

### Beispiel 5:

0,6 g tert.-Butylaminopropanol werden mit 3,4 g des Kleisters TTW Normal (Fa. Wilke/Magdeburg) vermischt. Dieser Mischung werden 208 mL Wasser zugegeben, und die Mischung wird daraufhin 1 Stunde lang gerührt. 5 g der so erhaltenen Kleistermischung werden auf eine 20 mal 40 cm große Alumiumplatte aufgestrichen und anschließend bei 30 °C für die Dauer von 72 Stunden getrocknet.

### Beispiel 5a:

Ein 2 mal 3 cm großes Stück der beschichteten Aluminumplatte aus Beispiel 5 wird auf den Boden eines Becherglases gelegt, das 10 mL einer Testkeimsuspension von Pseudomonas aeruginosa enthält. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10⁴ Keime pro mL gesunken.

### Beispiel 5b:

Ein 2 mal 3 cm großes Stück der beschichteten Aluminumplatte aus Beispiel 5 wird auf den Boden eines Becherglases gelegt, das 10 mL einer Testkeimsuspension von Staphylococcus aureus enthält. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10² Keime pro mL gesunken.

### Beispiel 5c:

Je ein 2 mal 3 cm großes Stück der beschichteten Aluminumplatte aus Beispiel 5 wird mit Chlorella sp., Trentepohlia sp., Gloeocapsa sp. Calothrix sp. und Aspergilus niger beimpft. Diese Proben werden im Anschluß für 3 Wochen in einen Brutschrank verbracht. Im Gegensatz zu mitlaufenden Kontrollproben aus unmodifiziertem Kleister ist bei keinem der modifizierten Kleisterproben ein Bewuchs feststellbar.

### Beispiel 6:

40 mL Dimethylaminopropylmethacrylamid (Fa. Aldrich) und 200 mL Ethanol werden in einem Dreihalskolben vorgelegt und unter Argonzustrom auf 65 °C erhitzt. Danach werden 0,4 g Azobisisobutyronitril gelöst in 20 mL Ethanol unter Rühren langsam zugetropft. Das Gemisch wird auf 70 °C erhitzt und 6 Stunden bei dieser Temperatur gerührt. Nach Ablauf dieser Zeit wird der Reaktionsmischung das Lösemittel durch Destillation entzogen und für 24 Stunden bei 50 °C im Vakuum getrocknet. Das Produkt wird anschließend in 200 ml Aceton gelöst, danach wird der Reaktionsmischung das Lösemittel durch Destillation entzogen und für 24 Stunden bei 50 °C im Vakuum getrocknet. Das Reaktionsprodukt wird im Anschluß fein zermörsert.

### Beispiel 6a:

0,6 g des Produktes aus Beispiel 6 werden fein zermörsert und mit 3,4 g des Kleisters TTW Normal (Fa. Wilke/ Magdeburg) vermischt. Dieser Mischung werden 208 mL Wasser zugegeben, und die Mischung wird daraufhin 1 Stunde lang gerührt. 5 g der so erhaltenen Kleistermischung werden auf eine 20 mal 40 cm große Alumiumplatte aufgestrichen und anschließend bei 30 °C für die Dauer von 72 Stunden getrocknet.

### Beispiel 6b:

Ein 2 mal 3 cm großes Stück der beschichteten Aluminumplatte aus Beispiel 6a wird auf den Boden eines Becherglases gelegt, das 10 mL einer Testkeimsuspension von Pseudomonas aeruginosa enthält. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10⁴ Keime pro mL gesunken.

### Beispiel 6c:

Ein 2 mal 3 cm großes Stück der beschichteten Aluminumplatte aus Beispiel 6a wird auf den Boden eines Becherglases gelegt, das 10 mL einer Testkeimsuspension von Staphylococcus aureus enthält. Das so vorbereitete System wird nun für die Dauer von 4 Stunden geschüttelt. Danach wird 1 mL der Testkeimsuspension entnommen. Nach Ablauf dieser Zeit sind keine Keime von Staphylococcus aureus mehr nachweisbar.

### Beispiel 6d:

Je ein 2 mal 3 cm großes Stück der beschichteten Aluminumplatte aus Beispiel 6a wird mit Chlorella sp., Trentepohlia sp., Gloeocapsa sp. Calothrix sp. und Aspergilus niger beimpft. Diese Proben werden im Anschluß für 3 Wochen in einen Brutschrank verbracht. Im Gegensatz zu mitlaufenden Kontrollproben aus unmodifiziertem Kleister ist bei keinem der modifizierten Kleisterproben ein Bewuchs feststellbar.

### Beispiel 7:

40 mL tert.-Butylaminoethylmethacrylat (Fa. Aldrich) und 210 mL Ethanol werden in einem Dreihalskolben vorgelegt und unter Argonzustrom auf 65 °C erhitzt. Danach werden 0,4 g Azobisisobutyronitril gelöst in 20 mL Ethanol unter Rühren langsam zugetropft. Das Gemisch wird auf 70 °C erhitzt und 6 Stunden bei dieser Temperatur gerührt. Nach Ablauf dieser Zeit wird der Reaktionsmischung das Lösemittel durch Destillation entzogen. Im Anschluß wird das Produkt für 24 Stunden bei 50 °C im Vakuum getrocknet. Das Produkt wird anschließend in 200 ml Aceton gelöst, danach wird der Reaktionsmischung das Lösemittel durch Destillation entzogen und für 24 Stunden bei 50 °C im Vakuum getrocknet.

### Beispiel 7a:

0,6 g des Produktes aus Beispiel 7 werden fein zermörsert und mit 3,4 g des Kleisters TTW Normal (Fa. Wilke/ Magdeburg) vermischt. Dieser Mischung werden 208 mL Wasser zugegeben, und die Mischung wird daraufhin 1 Stunde lang gerührt. 5 g der so erhaltenen Kleistermischung werden auf eine 20 mal 40 cm große Alumiumplatte aufgestrichen und anschließend bei 30 °C für die Dauer von 72 Stunden getrocknet.

### Beispiel 7b:

Ein 2 mal 3 cm großes Stück der beschichteten Aluminumplatte aus Beispiel 7a wird auf den Boden eines Becherglases gelegt, das 10 mL einer Testkeimsuspension von Pseudomonas aeruginosa enthält. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10³ Keime pro mL gesunken.

### Beispiel 7c:

Ein 2 mal 3 cm großes Stück der beschichteten Aluminumplatte aus Beispiel 7a wird auf den Boden eines Becherglases gelegt, das 10 mL einer Testkeimsuspension von Staphylococcus aureus enthält. Das so vorbereitete System wird nun für die Dauer von 4 Stunden geschüttelt. Danach wird 1 mL der Testkeimsuspension entnommen. Nach Ablauf dieser Zeit sind keine Keime von Staphylococcus aureus mehr nachweisbar.

### Beispiel 7d:

Je ein 2 mal 3 cm großes Stück der beschichteten Aluminumplatte aus Beispiel 7a wird mit Chlorella sp., Trentepohlia sp., Gloeocapsa sp. Calothrix sp. und Aspergilus niger beimpft. Diese Proben werden im Anschluß für 3 Wochen in einen Brutschrank verbracht. Im Gegensatz zu mitlaufenden Kontrollproben aus unmodifiziertem Kleister ist bei keinem der modifizierten Kleisterproben ein Bewuchs feststellbar.

### Beispiel 7e:

1 g des Produktes aus Beispiel 7 werden fein zermörsert und mit 3 g des Kleisters TTW Normal (Fa. Wilke/ Magdeburg) vermischt. Dieser Mischung werden 208 mL Wasser zugegeben, und die Mischung wird daraufhin 1 Stunde lang gerührt. 5 g der so erhaltenen Kleistermischung werden auf eine 20 mal 40 cm große Alumiumplatte aufgestrichen und anschließend bei 30 °C für die Dauer von 72 Stunden getrocknet.

### Beispiel 7f:

Ein 2 mal 3 cm großes Stück der beschichteten Aluminumplatte aus Beispiel 7e wird auf den Boden eines Becherglases gelegt, das 10 mL einer Testkeimsuspension von Pseudomonas aeruginosa enthält. Das so vorbereitete System wird nun für die Dauer von 4 Stunden geschüttelt. Danach wird 1 mL der Testkeimsuspension entnommen. Nach Ablauf dieser Zeit sind keine Keime von Pseudomonas aeruginosa mehr nachweisbar.

### Beispiel 7g:

Ein 2 mal 3 cm großes Stück der beschichteten Aluminumplatte aus Beispiel 7e wird auf den Boden eines Becherglases gelegt, das 10 mL einer Testkeimsuspension von Staphylococcus aureus enthält. Das so vorbereitete System wird nun für die Dauer von 4 Stunden geschüttelt. Danach wird 1 mL der Testkeimsuspension entnommen. Nach Ablauf dieser Zeit sind keine Keime von Staphylococcus aureus mehr nachweisbar.

### Beispiel 7h:

Je ein 2 mal 3 cm großes Stück der beschichteten Aluminumplatte aus Beispiel 7e wird mit Chlorella sp., Trentepohlia sp., Gloeocapsa sp. Calothrix sp. und Aspergilus niger beimpft. Diese Proben werden im Anschluß für 3 Wochen in einen Brutschrank verbracht. Im Gegensatz zu mitlaufenden Kontrollproben aus unmodifiziertem Kleister ist bei keinem der modifizierten Kleisterproben ein Bewuchs feststellbar.

### Beispiel 7i:

1,6 g des Produktes aus Beispiel 7.werden fein zermörsert und mit 2,4 g des Kleisters TTW Normal (Fa. Wilke/ Magdeburg) vermischt. Dieser Mischung werden 208 mL Wasser zugegeben, und die Mischung wird daraufhin 1 Stunde lang gerührt. 5 g der so erhaltenen Kleistermischung werden auf eine 20 mal 40 cm große Alumiumplatte aufgestrichen und anschließend bei 30 °C für die Dauer von 72 Stunden getrocknet.

### Beispiel 7j:

Ein 2 mal 3 cm großes Stück der beschichteten Aluminumplatte aus Beispiel 7i wird auf den Boden eines Becherglases gelegt, das 10 mL einer Testkeimsuspension von Pseudomonas aeruginosa enthält. Das so vorbereitete System wird nun für die Dauer von 4 Stunden geschüttelt. Danach wird 1 mL der Testkeimsuspension entnommen. Nach Ablauf dieser Zeit sind keine Keime von Pseudomonas aeruginosa mehr nachweisbar.

### Beispiel 7k:

Ein 2 mal 3 cm großes Stück der beschichteten Aluminumplatte aus Beispiel 7i wird auf den Boden eines Becherglases gelegt, das 10 mL einer Testkeimsuspension von Staphylococcus aureus enthält. Das so vorbereitete System wird nun für die Dauer von 4 Stunden geschüttelt. Danach wird 1 mL der Testkeimsuspension entnommen. Nach Ablauf dieser Zeit sind keine Keime von Staphylococcus aureus mehr nachweisbar.

### Beispiel 7l:

Je ein 2 mal 3 cm großes Stück der beschichteten Aluminumplatte aus Beispiel 7i wird mit Chlorella sp., Trentepohlia sp., Gloeocapsa sp. Calothrix sp. und Aspergilus niger beimpft. Diese Proben werden im Anschluß für 3 Wochen in einen Brutschrank verbracht. Im Gegensatz zu mitlaufenden Kontrollproben aus unmodifiziertem Kleister ist bei keinem der modifizierten Kleisterproben ein Bewuchs feststellbar.

### Beispiel 7m:

0,2 g des Produktes aus Beispiel 7 werden fein zermörsert und mit 3,8 g des Kleisters TTW Normal (Fa. Wilke/ Magdeburg) vermischt. Dieser Mischung werden 208 mL Wasser zugegeben, und die Mischung wird daraufhin 1 Stunde lang gerührt. 5 g der so erhaltenen Kleistermischung werden auf eine 20 mal 40 cm große Alumiumplatte aufgestrichen und anschließend bei 30 °C für die Dauer von 72 Stunden getrocknet.

### Beispiel 7n:

Ein 2 mal 3 cm großes Stück der beschichteten Aluminumplatte aus Beispiel 7m wird auf den Boden eines Becherglases gelegt, das 10 mL einer Testkeimsuspension von Pseudomonas aeruginosa enthält. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10⁴ Keime pro mL gesunken.

### Beispiel 7o:

Ein 2 mal 3 cm großes Stück der beschichteten Aluminumplatte aus Beispiel 7m wird auf den Boden eines Becherglases gelegt, das 10 mL einer Testkeimsuspension von Staphylococcus aureus enthält. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10⁴ Keime pro mL gesunken.

### Beispiel 7p:

Je ein 2 mal 3 cm großes Stück der beschichteten Aluminumplatte aus Beispiel 7m wird mit Chlorella sp., Trentepohlia sp., Gloeocapsa sp. Calothrix sp. und Aspergilus niger beimpft.

Diese Proben werden im Anschluß für 3 Wochen in einen Brutschrank verbracht. Im Gegensatz zu mitlaufenden Kontrollproben aus unmodifiziertem Kleister ist bei keinem der modifizierten Kleisterproben ein Bewuchs feststellbar.

### Beispiel 7q:

0,1 g des Produktes aus Beispiel 7 werden fein zermörsert und mit 3,9 g des Kleisters TTW Normal (Fa. Wilke/ Magdeburg) vermischt. Dieser Mischung werden 208 mL Wasser zugegeben, und die Mischung wird daraufhin 1 Stunde lang gerührt. 5 g der so erhaltenen Kleistermischung werden auf eine 20 mal 40 cm große Alumiumplatte aufgestrichen und anschließend bei 30 °C für die Dauer von 72 Stunden getrocknet.

### Beispiel 7r:

Ein 2 mal 3 cm großes Stück der beschichteten Aluminumplatte aus Beispiel 7q wird auf den Boden eines Becherglases gelegt, das 10 mL einer Testkeimsuspension von Pseudomonas aeruginosa enthält. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10⁵ Keime pro mL gesunken.

### Beispiel 7s:

Ein 2 mal 3 cm großes Stück der beschichteten Aluminumplatte aus Beispiel 7q wird auf den Boden eines Becherglases gelegt, das 10 mL einer Testkeimsuspension von Staphylococcus aureus enthält. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10⁵ Keime pro mL gesunken.

### Beispiel 7t:

Je ein 2 mal 3 cm großes Stück der beschichteten Aluminumplatte aus Beispiel 7q wird mit Chlorella sp., Trentepohlia sp., Gloeocapsa sp. Calothrix sp. und Aspergilus niger beimpft. Diese Proben werden im Anschluß für 3 Wochen in einen Brutschrank verbracht. Im Gegensatz zu mitlaufenden Kontrollproben aus unmodifiziertem Kleister ist bei keinem der modifizierten Kleisterproben ein Bewuchs feststellbar.

### Beispiel 8:

6 g 3-Aminopropyl-vinylether (Fa. Aldrich), 6 g Methacrylsäuremethylester (Fa. Aldrich), und 60 ml Ethanol werden in einem Dreihalskolben vorgelegt und unter Argonzustrom auf 65 °C erhitzt. Danach werden 0,15 g Azobisisobutyronitril gelöst in 4 ml Ethylmethylketon unter Rühren langsam zugetropft. Das Gemisch wird auf 70 °C erhitzt und 72 h Stunden bei dieser Temperatur gerührt. Nach Ablauf dieser Zeit wird die Reaktionsmischung in 0,5 1 VE-Wasser eingerührt, wobei das polymere Produkt ausfällt. Nach Abfiltrieren des Produktes wird der Filterrückstand mit 100 ml VE-Wasser gespült, um noch vorhandene Restmonomere zu entfernen. Im Anschluß wird das Produkt für 24 Stunden bei 50 °C im Vakuum getrocknet.

### Beispiel 8a:

1,6 g des Produktes aus Beispiel 8 werden fein zermörsert und mit 2,4 g des Kleisters TTW Normal (Fa. Wilke/ Magdeburg) vermischt. Dieser Mischung werden 208 mL Wasser zugegeben, und die Mischung wird daraufhin 1 Stunde lang gerührt. 5 g der so erhaltenen Kleistermischung werden auf eine 20 mal 40 cm große Alumiumplatte aufgestrichen und anschließend bei 30 °C für die Dauer von 72 Stunden getrocknet.

### Beispiel 8b:

Ein 2 mal 3 cm großes Stück der beschichteten Aluminumplatte aus Beispiel 8a wird auf den Boden eines Becherglases gelegt, das 10 mL einer Testkeimsuspension von Pseudomonas aeruginosa enthält. Das so vorbereitete System wird nun für die Dauer von 4 Stunden geschüttelt. Danach wird 1 mL der Testkeimsuspension entnommen. Nach Ablauf dieser Zeit sind keine Keime von Pseudomonas aeruginosa mehr nachweisbar.

### Beispiel 8c:

Ein 2 mal 3 cm großes Stück der beschichteten Aluminumplatte aus Beispiel 8a wird auf den Boden eines Becherglases gelegt, das 10 mL einer Testkeimsuspension von Staphylococcus aureus enthält. Das so vorbereitete System wird nun für die Dauer von 4 Stunden geschüttelt. Danach wird 1 mL der Testkeimsuspension entnommen. Nach Ablauf dieser Zeit sind keine Keime von Staphylococcus aureus mehr nachweisbar.

### Beispiel 8d:

Je ein 2 mal 3 cm großes Stück der beschichteten Aluminumplatte aus Beispiel 8a wird mit Chlorella sp., Trentepohlia sp., Gloeocapsa sp. Calothrix sp. und Aspergilus niger beimpft. Diese Proben werden im Anschluß für 3 Wochen in einen Brutschrank verbracht. Im Gegensatz zu mitlaufenden Kontrollproben aus unmodifiziertem Kleister ist bei keinem der modifizierten Kleisterproben ein Bewuchs feststellbar.

### Beispiel 9:

2 mL tert.-Butylaminoethylmethacrylat (Fa. Aldrich), 5,7 g Triton X 405 (Fa. Aldrich), 25 mL VE-Wasser und 0,08 g Kaliumperoxodisulfat (Fa. Aldrich) werden in einem Dreihalskolben vorgelegt und unter Argonzustrom auf 60 °C erhitzt. Danach werden über einen Zeitraum von 4 Stunden weitere 23 mL tert.-Butylaminoethylmethacrylat zugetropft. Anschließend rührt man die Mischung noch weitere 2 Stunden bei 60 °C, danach läßt man die entstandene Emulsion auf Raumtemperatur abkühlen.

### Beispiel 9a:

4 g des Kleisters TTW Normal (Fa. Wilke/ Magdeburg) werden 208 mL Wasser vermischt, und die Mischung wird daraufhin 1 Stunde lang gerührt. Zu dieser Mischung wird 1 g des Produktes aus Beispiel 9 gegeben, und die Mischung wird daraufhin eine weitere Stunde lang gerührt. 5 g der so erhaltenen Kleistermischung werden auf eine 20 mal 40 cm große Alumiumplatte aufgestrichen und anschließend bei 30 °C für die Dauer von 72 Stunden getrocknet.

### Beispiel 9b:

Ein 2 mal 3 cm großes Stück der beschichteten Aluminumplatte aus Beispiel 9a wird auf den Boden eines Becherglases gelegt, das 10 mL einer Testkeimsuspension von Pseudomonas aeruginosa enthält. Das so vorbereitete System wird nun für die Dauer von 4 Stunden geschüttelt. Danach wird 1 mL der Testkeimsuspension entnommen. Nach Ablauf dieser Zeit sind keine Keime von Pseudomonas aeruginosa mehr nachweisbar.

### Beispiel 9c:

Ein 2 mal 3 cm großes Stück der beschichteten Aluminumplatte aus Beispiel 9a wird auf den Boden eines Becherglases gelegt, das 10 mL einer Testkeimsuspension von Staphylococcus aureus enthält. Das so vorbereitete System wird nun für die Dauer von 4 Stunden geschüttelt. Danach wird 1 mL der Testkeimsuspension entnommen. Nach Ablauf dieser Zeit sind keine Keime von Staphylococcus aureus mehr nachweisbar.

### Beispiel 9d:

Je ein 2 mal 3 cm großes Stück der beschichteten Aluminumplatte aus Beispiel 9a wird mit Chlorella sp., Trentepohlia sp., Gloeocapsa sp. Calothrix sp. und Aspergilus niger beimpft. Diese Proben werden im Anschluß für 3 Wochen in einen Brutschrank verbracht. Im Gegensatz zu mitlaufenden Kontrollproben aus unmodifiziertem Kleister ist bei keinem der modifizierten Kleisterproben ein Bewuchs feststellbar.

### Beispiel 9e:

4 g des Kleisters TTW Normal (Fa. Wilke/ Magdeburg) werden 208 mL Wasser vermischt, und die Mischung wird daraufhin 1 Stunde lang gerührt. Zu dieser Mischung werden 2 g des Produktes aus Beispiel 9 gegeben, und die Mischung wird daraufhin eine weitere Stunde lang gerührt. 5 g der so erhaltenen Kleistermischung werden auf eine 20 mal 40 cm große Alumiumplatte aufgestrichen und anschließend bei 30 °C für die Dauer von 72 Stunden getrocknet.

### Beispiel 9f:

Ein 2 mal 3 cm großes Stück der beschichteten Aluminumplatte aus Beispiel 9e wird auf den Boden eines Becherglases gelegt, das 10 mL einer Testkeimsuspension von Pseudomonas aeruginosa enthält. Das so vorbereitete System wird nun für die Dauer von 4 Stunden geschüttelt. Danach wird 1 mL der Testkeimsuspension entnommen. Nach Ablauf dieser Zeit sind keine Keime von Pseudomonas aeruginosa mehr nachweisbar.

### Beispiel 9g:

Ein 2 mal 3 cm großes Stück der beschichteten Aluminumplatte aus Beispiel 9e wird auf den Boden eines Becherglases gelegt, das 10 mL einer Testkeimsuspension von Staphylococcus aureus enthält. Das so vorbereitete System wird nun für die Dauer von 4 Stunden geschüttelt. Danach wird 1 mL der Testkeimsuspension entnommen. Nach Ablauf dieser Zeit sind keine Keime von Staphylococcus aureus mehr nachweisbar.

### Beispiel 9h:

Je ein 2 mal 3 cm großes Stück der beschichteten Aluminumplatte aus Beispiel 9e wird mit Chlorella sp., Trentepohlia sp., Gloeocapsa sp. Calothrix sp. und Aspergilus niger beimpft. Diese Proben werden im Anschluß für 3 Wochen in einen Brutschrank verbracht. Im Gegensatz zu mitlaufenden Kontrollproben aus unmodifiziertem Kleister ist bei keinem der modifizierten Kleisterproben ein Bewuchs feststellbar.

### Beispiel 9i:

4 g des Kleisters TTW Normal (Fa. Wilke/ Magdeburg) werden 208 mL Wasser vermischt, und die Mischung wird daraufhin 1 Stunde lang gerührt. Zu dieser Mischung werden 0,25 g des Produktes aus Beispiel 9 gegeben, und die Mischung wird daraufhin eine weitere Stunde lang gerührt. 5 g der so erhaltenen Kleistermischung werden auf eine 20 mal 40 cm große Alumiumplatte aufgestrichen und anschließend bei 30 °C für die Dauer von 72 Stunden getrocknet.

### Beispiel 9j:

Ein 2 mal 3 cm großes Stück der beschichteten Aluminumplatte aus Beispiel 9i wird auf den Boden eines Becherglases gelegt, das 10 mL einer Testkeimsuspension von Pseudomonas aeruginosa enthält. Das so vorbereitete System wird nun für die Dauer von 4 Stunden geschüttelt. Danach wird 1 mL der Testkeimsuspension entnommen. Nach Ablauf dieser Zeit ist die Keimzahl von 10⁷ auf 10⁴ Keime pro mL gesunken.

### Beispiel 9k:

Ein 2 mal 3 cm großes Stück der beschichteten Aluminumplatte aus Beispiel 9i wird auf den Boden eines Becherglases gelegt, das 10 mL einer Testkeimsuspension von Staphylococcus aureus enthält. Das so vorbereitete System wird nun für die Dauer von 4 Stunden geschüttelt.

Danach wird 1 mL der Testkeimsuspension entnommen. Nach Ablauf dieser Zeit ist die Keimzahl von 10⁷ auf 10⁴ Keime pro mL gesunken.

### Beispiel 9l:

Je ein 2 mal 3 cm großes Stück der beschichteten Aluminumplatte aus Beispiel 9i wird mit Chlorella sp., Trentepohlia sp., Gloeocapsa sp. Calothrix sp. und Aspergilus niger beimpft. Diese Proben werden im Anschluß für 3 Wochen in einen Brutschrank verbracht. Im Gegensatz zu mitlaufenden Kontrollproben aus unmodifiziertem Kleister ist bei keinem der modifizierten Kleisterproben ein Bewuchs feststellbar.

## Patentansprüche

1. Antimikrobieller Kleister,
**dadurch gekennzeichnet,**
**dass** der Trockenkleister 0,01 bis 70 Gew.-% mindestens einer antimikrobiellen Verbindung enthält.

2. Antimikrobieller Kleister nach Anspruch 1,
**dadurch gekennzeichnet,**
**dass** die antimikrobielle Verbindung ein antimikrobielles Polymer ist.

3. Antimikrobieller Kleister nach einem der Ansprüche 1 oder 2,
**dadurch gekennzeichnet,**
**dass** die antimikrobielle Verbindung ein antimikrobielles Polymer, hergestellt aus stickstoff- und/oder phosphorfunktionalisierten Monomeren ist.

4. Antimikrobieller Kleister nach einem der Ansprüche 1 bis 3,
**dadurch gekennzeichnet,**
**dass** die antimikrobiellen Verbindungen antimikrobielle Polymere, hergestellt aus mindestens einem der folgenden Monomere:
Methacrylsäure-2-tert.-butylaminoethylester, Methacrylsäure-2-diethylaminoethylester, Methacrylsäure-2-diethylaminomethylester, Acrylsäure-2-tert.-butylaminoethylester, Acrylsäure-3-dimethylaminopropylester, Acrylsäure-2-diethylaminoethylester, Acrylsäure-2-dimethylaminoethylester, Dimethylaminopropylmethacrylamid, Diethylaminopropylmethacrylamid, Acrylsäure-3-dimethylaminopropylamid, 2-Methacryloyloxyethyltrimethylammoniummethosulfat, Methacrylsäure-2-diethylaminoethylester, 2-Methacryloyloxyethyltrimethylammoniumchlorid, 3-Methacryloylaminopropyltrimethylammonium-chlorid, 2-Methacryloyloxyethyltrimethylammoniumchlorid, 2-Acryloyloxyethyl-4-benzoyldimethylammoniumbromid, 2- Methacryloyloxyethyl-4-benzoyldimethylammoniumbromid, Allyltriphenylphosphoniumbromid, Allyltriphenylphosphoniumchlorid, 2-Acrylamido-2-methyl-1-propansulfonsäure, 2-Diethylaminoethylvinylether und/oder 3-Aminopropylvinylether sind.

5. Antimikrobieller Kleister nach Anspruch 4,
**dadurch gekennzeichnet,**
**dass** die antimikrobiellen Polymere noch mindestens ein weiteres aliphatisch ungesättigtes Monomer aus der Gruppe Acrylate oder Methacrylate, Acrylsäure, tert.-Butylmethacrylat oder Methylmethacrylat, Styrol oder seine Derivate, Vinylchlorid, Vinylether, Acrylamide, Acrylnitrile, Olefine (Ethylen, Propylen, Butylen, Isobutylen), Allylverbindungen, Vinylketone, Vinylessigsäure, Vinylacetat oder Vinylester, Methacrylsäuremethylester, Methacrylsäureethylester, Methacrylsäurebutylester, Methacrylsäure-tert.-butylester, Acrylsäuremethylester, Acrylsäureethylester, Acrylsäurebutylester und/oder Acrylsäuretert.-butylester, enthalten .

6. Antimikrobieller Kleister nach Anspruch 1,
**dadurch gekennzeichnet,**
**dass** die antimikrobielle Verbindung ein Aminoalkohol ist.

7. Antimikrobieller Kleister nach Anspruch 1 oder 6,
**dadurch gekennzeichnet,**
**dass** die antimikrobielle Verbindung ein Aminoalkohol der Formel 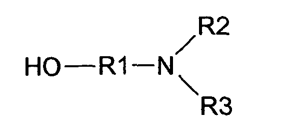 mit
R1 = verzweigter oder unverzweigter aliphatischer oder aromatischer Kohlenwasserstoffrest mit 1 bis 15 Kohlenstoffatomen.
R2 = H, verzweigter oder unverzweigter aliphatischer oder aromatischer Kohlenwasserstoffrest mit 1 bis 15 Kohlenstoffatomen.
R3 = H, verzweigter oder unverzweigter aliphatischer oder aromatischer Kohlenwasserstoffrest mit 1 bis 15 Kohlenstoffatomen
ist.

8. Antimikrobielle Kleister nach einem der Ansprüche 1, 6 oder 7,
**dadurch gekennzeichnet,**
**dass** die antimikrobiellen Verbindungen tert.-Butylaminoethanol, tert.-Butylaminomethanol, tert.-Butylaminopropanol, 2-Butylaminoethanol, 2-Butylaminomethanol, 2-Butylaminopropanol, 2-Diethylaminoethanol, 2-Diethylaminomethanol, 2-Diethylaminopropanol, 2-Dimethylaminoethanol, 2-Dimethylaminomethanol, 2-Dimethylaminopropanol, Aminomethanol, Aminoethanol, Aminopropanol und/oder Aminobutanol sind.

9. Verwendung der antimikrobiellen Kleister gemäß einem der Ansprüche 1 bis 8 als Tapetenkleister, Papierkleister und Holzkleister.
